# EUROPEAN PATENT APPLICATION

(11) **EP 4 517 029 A1**
(43) Date of publication of application: **05.03.2025**
(21) Application number: 23315339.4
(22) Date of filing: 04.09.2023
(51) Int. Cl.: E04H 12/08, F03D 13/25, F03D 80/80

(54) **OFFSHORE WIND TURBINE MAST**

(71) Applicant: TotalEnergies OneTech, 92400 Courbevoie (FR)
(72) Inventor: Raboin, Jean-Christophe, 92400 COURBEVOIE (FR); Aubert, Jean-Michel, 92400 COURBEVOIE (FR)
(74) Representative: Innovincia

(57) **Abstract**

The invention relates to an offshore wind turbine mast (1) comprising a main body formed by at least one section (2, 2'), the section comprising at least one side wall comprising:
- an external metal panel (6, 16, 26, 36),
- an internal metal panel (8, 18, 28, 38) parallel to the external metal panel,
- at least one corrugated metal sheet (10, 20, 30, 40) extending within a space formed between the external metal panel and the internal metal panel, wherein the corrugated metal sheet is attached to both the internal metal panel and the external metal panel.

## Description

A wind turbine, whether offshore or onshore, includes a mast at the top of which a nacelle, a generator unit, and blades are mounted. Therefore, it is a part of the wind turbine that extends vertically to a relatively significant height. The increase in turbine size and power leads to an increase in mast diameters and thickness.

In the case of an offshore wind turbine, the design of floating platforms depends on the physical characteristics of the turbines and masts (dimension, mass, natural frequency, maximum tilt angle during operation, vibration, acceleration).

With the increasing dimensions of turbines and masts, incompatibilities arise, particularly regarding the natural vibration frequencies of the mast-turbine assembly compared to the frequency of the waves and oscillations generated by the floating platform. Additionally, the 1 P/3P frequency, which is the respective frequencies of the rotor and the passing of the blades in front of the mast, needs to be considered. It is necessary to ensure that the natural frequency of the mast-turbine assembly, especially the mast's natural frequency, is different from the wave frequency, the oscillation generated by the floating platform, and also from the 1P/3P frequency to avoid resonance that could lead to significant damage to the wind turbine structure. A minimum difference of 5% is necessary.

The conventional design of offshore wind turbine masts can be a problem in terms of separating the natural frequency of the mast from the other aforementioned frequencies. One direct consequence of this difficulty is an increase in safety shutdown periods, resulting in reduced electrical productivity.

An offshore wind turbine mast is typically constructed in a modular manner using cylindrical and/or tapered steel sections. These mast sections are manufactured by rolling and welding steel sheets. The mast sections are then assembled on-site by bolting internal flanges. The technical specifications required for the turbines and blades are usually achieved through optimization of the mast's diameter and thickness. The mast is sometimes monolithic or consists of two to three sections assembled on-site, depending on the available means of transport and installation.

In order to modify the mast's natural frequency, it is known to vary the mast's diameter or switch from steel masts to concrete masts, possibly with a pre-stressing form. Reinforcing steel arrangements can be welded to the mast as metal reinforcements when increasing the mast diameter. However, this increases the number of weld points and angles, thereby increasing the risk of corrosion. It also leads to a higher frequency of structural integrity checks and maintenance, as well as an increased amount of anti-corrosion coating required to protect the mast. Additionally, the manufacturing time and cost of such masts are also increased.

The invention aims to provide an offshore wind turbine mast that optimally addresses the aforementioned frequency issues while reducing the cost, manufacturing time, and maintenance requirements of the mast.

To this end, the invention provides an offshore wind turbine mast comprising a main body formed by at least onesection, the section comprising at least one side wall comprising:
- an external metal panel,
- an internal metal panel parallel to the external panel,
- at least one metal corrugated sheet extending within a space formed between the external panel and the internal panel, wherein the metal corrugated sheet is attached to both the internal metal panel and the external metal panel.

It is thus possible, thanks to the architecture according to the invention, to work on the dimensions of the mast, for example by choosing to decrease the external diameter of the mast and increase the thickness of the corrugated steel sheet or even double the corrugated steel sheets, add an additional steel sheet between two corrugated steel sheets, etc. This adaptation helps to reduce the intensity of the frequency associated with the passage of the blades in front of the mast (which allows for separation from the different frequencies mentioned above), thereby reducing induced fatigue and extending the lifespan of the structure.

Furthermore, a lighter mast is obtained compared to prior art structures because it is devoid of reinforcements, while maintaining optimal mechanical properties due to the structure of the side wall(s). The absence of reinforcements reduces the time of production for the mast and reduces the surface area requiring an anti-corrosion coating, resulting in cost savings in production. The reduction of the amount of steel used allows to cost savings in production.

The attachment points between the panels and the corrugated sheet are not exposed to external marine conditions, reducing mast maintenance costs.

Finally, the combination of mast stiffening (thanks to the new structure of the main body) with oscillation damping and the reduction in the external diameter of the mast provides greater working comfort for personnel in charge of inspection and maintenance operations, due to a potential reduction in measurable acceleration at the top of the mast, in the nacelle housing the turbine.

The offshore wind turbine mast can comprise at least one of the following features :
- the section is formed by only one tubular side wall;
- the section is formed by multiple flat side walls attached to each other;
- at least one flat side wall forms an airtight volume relative to the other flat side walls;
- at least one flat side wall comprises at least one connecting end to a second flat side wall formed solely by the external metal panel and/or by the internal metal panel and including a fold;
- the corrugated metal sheet is glued to at least one of the internal and external metal panels;
- the corrugated metal sheet is welded to at least one of the internal and external metal panels by resistance welding;
- the side wall comprises several superimposed corrugated metal sheets;
- the amplitude and/or period and/or thickness of the corrugations are different from one corrugated metal sheet to another, and a flat metal sheet is preferably arranged between two consecutive corrugated metal sheets;
- the space formed between the external metal panel and the internal metal panel is sealed, at least one side wall of the mast comprising at least one pressurizing device of the space formed between the external metal panel and the internal metal panel;
- the pressurizing device is configured to maintain a constant overpressure in the space formed between the external metal panel and the internal metal panel;
- the internal and external metal panels are smooth;
- the main body is formed by a plurality of sections, at least one end of each section being covered by an internal flange for securing each section to another section.
- fixation means between two internal flanges of two different sections are located in an internal volume of the mast;

The invention also relates to an offshore wind turbine platform comprising at least one mast according to the invention.

The invention also relates to a panel intended to form at least one part of an offshore wind turbine mast, the panel comprising:
- an external metal panel,
- an internal metal panel parallel to the external metal panel,
- at least one corrugated metal sheet extending within a space formed between the external metal panel and the internal metal panel, wherein the corrugated metal sheet is attached to both the internal metal panel and the external metal panel, the panel forming a sealed internal volume.

### Brief description of figures

The invention will be better understood by reading the following description, given solely as an example and referring to the accompanying drawings in which:
Figure 1 is a representation of an assembly of a section of a mast according to a first embodiment of the invention,
Figure 2 is an exploded view of a side wall of a section of the mast according to a first variant of a second embodiment of the invention,
Figure 3 is an assembled view of a side wall of a section of the mast according to the first variant of the second embodiment of the invention,
Figure 4 is a view of the assembled side walls of a section of the mast according to the first variant of the second embodiment of the invention,
Figure 5 is an assembled view of a side wall of a section of the mast according to a second variant of the second embodiment of the invention,
Figure 6 is an assembled view of a side wall of a section of the mast according to a third variant of the second embodiment of the invention,
Figure 7 is a view of the assembled side walls of a section of the mast according to the third variant of the second embodiment of the invention,
Figure 8 is an assembled view of a side wall of a section of the mast according to a fourth variant of the second embodiment of the invention,
Figure 9 is a view of a section of the mast according to the second embodiment of the invention, and
Figure 10 is a view of the mast formed by three sections according to the second embodiment of the invention.

### Detailed description

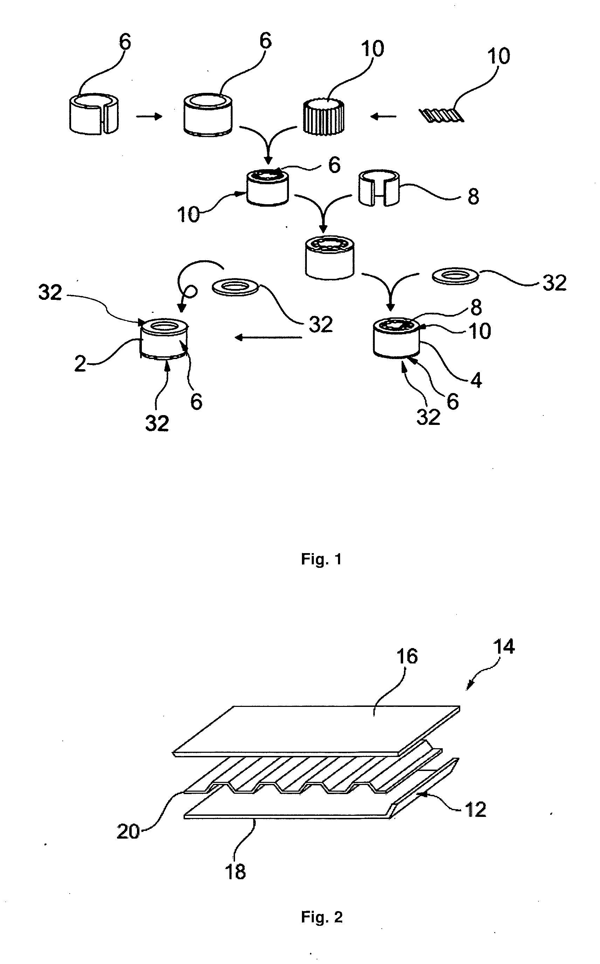

We are now referring to figure 1 illustrating an assembling method of a section 2 of an offshore wind turbine mast 1, the section 2 comprising at least one side wall 4 comprising:
- an external metal panel 6,
- an internal metal panel 8 parallel to the external panel 6,
- at least one corrugated metal sheet 10 extending within a space formed between the external metal panel 6 and the internal metal panel 8, wherein the corrugated metal sheet 10 is attached to both the internal metal panel 8 and the external metal panel 6.

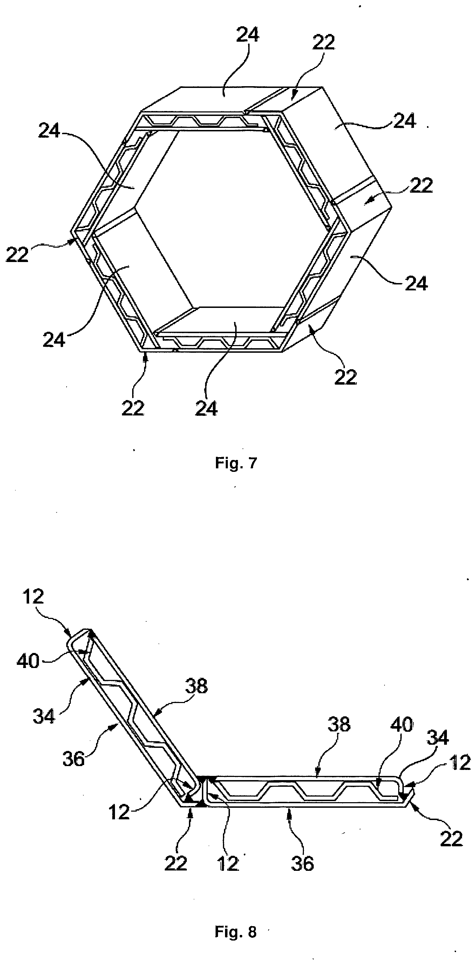

A main body of the mast can be formed by only one section 2, or, as illustrated in figure 8, by several sections attached to one another.

The external metal panel 6, the internal metal panel 8 and the corrugated metal sheet 10 are preferably made of steel, more preferably of stainless steel. Preferably, the internal and external metal panels 6 and 8 are smooth, in order to reduce the amount of anti-corrosion coating to use in order to protect the mast.

The corrugated metal sheet 10 can extend or not on the whole height of the side wall 4. This is the case for all the embodiments of the invention.

The attachment method of the corrugated metal sheet 10 to the external metal panel 6 and to the internal metal sheet 8 is preferably chosen among welding and gluing (exclusive or combined methods). A gluing method reduces manufacturing times compared to welding, while at the same time enabling good force transfer by providing an adhesive sufficiently elastic. For this purpose, an adhesive based on an acrylic or methacrylic acid ester polymer such as, for example, polymethyl or ethyl methacrylate, or methyl or ethyl polyacrylate can be an acceptable adhesive for joining steel parts of any grade. The metal parts are preferably degreased before gluing. A simple checking step for the absence of greasy products can also be performed. The use of a flexible adhesive to join the corrugated metal sheet 10 to the external and/or internal metal panel 6 and 8 also has a beneficial effect on the damping of some frequencies, and increases the service life of the mast by reducing vibration-induced mechanical fatigue. In addition, the use of a flexible (i.e., soft) adhesive increases breaking strength compared with a rigid adhesive. In case of welding, the corrugated metal sheet 10 can be welded to at least one of the internal and external metal panels 6 and 8 by resistance welding. This method is preferred for its speed of execution (largely robotized), its mechanical quality and its cost effectivity.

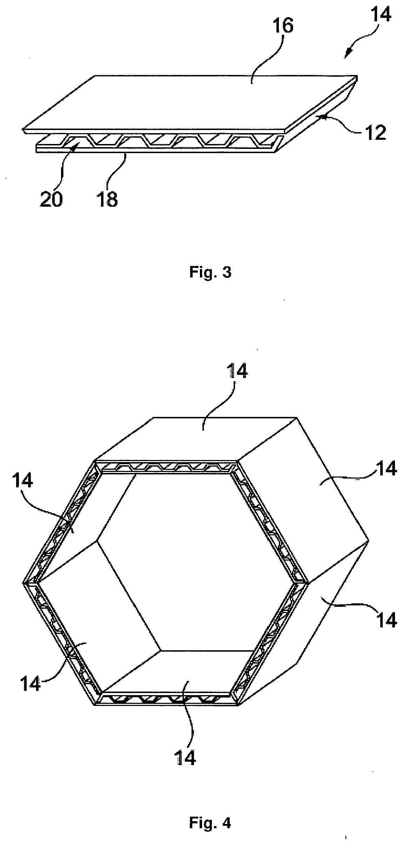

Preferably, at least one lateral face of the side wall 4 (i.e., the free ends of the side wall 8) is closed by a junction between the external metal wall 6 and the internal metal wall 8, as shown on figure 3 on which an external metal panel 6 end 12 is folded to be attached, for example by welding, to the internal metal panel 8. Alternatively to a direct attachment between the external metal panel 6 and the internal metal panel 8, a third part can be provided to ensure the link between these two panels. For example, and as shown on figures 7 and 8, internal flanges allow to close the gap between the external metal panel 6 and the internal metal panel 8 when the section 2 is assembled. Preferably, all the lateral faces of the side wall 4 are closed thanks to at least one of the alternatives described above in order to form the side wall 4 as a sealed space.

Preferably, at least one part of the corrugated metal sheet 10 is dimensioned and attached to the internal metal panel 8 and/or the external metal panel 6 to form at least one sealed compartment between the corrugated metal sheet 10 and the internal metal panel 8 and/or the external metal panel 6.

Figure 1 illustrates a first embodiment of a section 2 according to the invention. This figure shows the construction of a section 2 comprising a tubular side wall 8.

A first metal coil sheet, with a thickness comprised between 5 and 15 millimeters, for example equal to 7 millimeters, and a wideness approximatively equal to 5 meters, is bent with a radius of curvature of 5 meters to form a first cylinder of 10 meters of diameter. The outer edges are chamfered and the abutting edges are welded to form the first tube, 10 meters in diameter and 5 meters long. At this stage, it is possible to weld several tubes together to form the external metal panel 6, for example 8 tubes to form a 40-meters long external metal panel 6.

A corrugated metal sheet 10 with a thickness comprised between 2 and 5 millimeters, an amplitude comprised between 100 and 300 millimeters and a period comprised between 100 and 500 millimeters is bent inside the external metal panel 6 so as to cover part (in the case of parts reserved for transmitting forces) or all of its internal surface. The corrugated metal sheet 10 flutes are positioned parallel to the external metal panel 6 axis of rotation. The corrugated metal sheet 10 is attached to the external metal panel 6 by gluing or welding, as described above. The yield strength of corrugated metal sheet is between 315 and 460 MPa. This operation can be repeated several times in order to cover the external metal panel 6 with corrugated metal sheets 10.

In order to form the internal metal panel 8, a second metal coil sheet, with a thickness comprised between 5 and 15 millimeters, for example equal to 7 millimeters, and a wideness approximatively equal to 5 meters, is bent with a 4.895 meters radius of curvature to form a second 9,79 meters cylinder. The inner edges are chamfered and the 9,79 meters cylinder is lightly rolled up, taking care not to exceed the limits of elastic deformation, held in compression and then inserted into the assembly comprising the external metal panel 6 and the corrugated metal sheet 10. The face of the corrugated metal sheet 10 intended to be in contact with the internal metal panel 8 can be previously coated with an acrylic adhesive. The compression on the second cylinder is released and the outer walls of the second cylinder are pressed against the glue-coated flutes and held in place until the glue sets. Glue setting time is adapted to the glue specifications, typically from 1 to 48 hours. The inner edges of the second cylinder can be welded together to form a cylindrical steel sandwich panel. This operation can be repeated several times, in case of an external metal panel 6 formed by several tubes welded together, in order to cover the entirety of the mast 1.

Figures 2 and 3 illustrate a side wall 14 according to a first variant of a second embodiment of the invention. This side wall 14 is flat and constituted by an external metal panel 16, an internal metal panel 18 and a corrugated metal sheet 20. The corrugated metal sheet 20 is attached to the external and internal metal panels 16 and 18 thanks to an attachment medium described above. The dimensions (thickness, wideness, amplitude period) of the different parts are similar to the first embodiment.

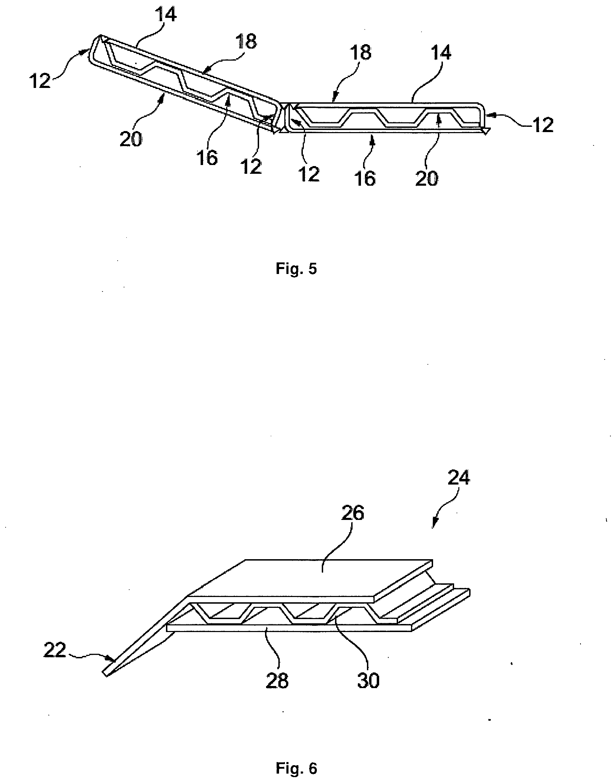

In this variant, one end 12 of the internal metal wall 18 is, as explained above, folded in order to be attached to the external metal panel 16 and to close one lateral face of the side wall 14. The folding angle can be comprised between 60° and 85°. The three other lateral faces of the side wall 14 are open. The number of faces closed by a folded end of the internal or external metal panels 16 or 18 can be superior to one lateral face, for example with two ends folded, using the same panel or the two panels with one folded end by panel. Figure 5 illustrates a second variant of the second embodiment of a side wall 14 according to the invention in which the internal metal panel 18 and the external metal panel 16 have both a folded end 12 in order to close two lateral faces of the side wall 14.

As shown on figure 4, the section 2 is formed by six side walls 14 (the number of side walls 14 can be different) welded together. One open lateral wall is closed by the junction between two side walls 14 (thanks to the folded end of another side wall 14), the other open lateral faces can be closed by welding internal flanges 32 (circular or not). In this configuration, each side wall 14 forms a closed and airtight volume relative to the other flat side walls 14.

Figure 6 illustrates a side wall 24 according to a third variant of a second embodiment of the invention. This side wall 24 is flat and constituted by an external metal panel 26, an internal metal panel 28 and a corrugated metal sheet 30. The corrugated metal sheet 30 is attached to the external and internal metal panels 26 and 28 thanks to an attachment medium described above. The dimensions (thickness, wideness, amplitude period) of the different parts are similar to the first embodiment.

This variant is similar to the first variant shown in Figures 2 and 3, except that the two external and internal metal panels 26 and 28 are not aligned. The folding angle of one end 22 of the external metal panel 26 is less than that of the first variant, being comprised between 30° and 60°. This end 22 protrudes to the internal metal panel 28 and is intended to close an open lateral face of another side wall 14, as shown in Figure 6. Figure 8 illustrates a fourth variant of the second embodiment of a side wall 34 according to the invention in which the internal metal panel 38 and the external metal panel 36 have both a folded end 12 in order to close two lateral faces of the side wall 34, and the external metal panel 36 comprises a folded end 22 in order to link two side walls 34 together.

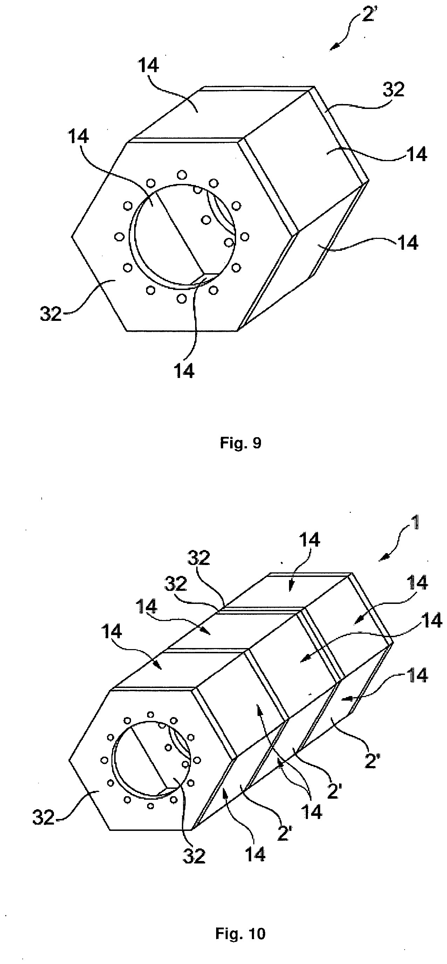

Figure 9 shows a section 2' comprising six side walls 14 and two internal flanges 32. The internal flanges allow to attach different sections together, for example by bolting them together, as shown on figure 10 illustrating three sections 2' bolted to one another, the internal flanges 32 extending in an internal volume of the mast. For example, each section 2' can be a 40-meters long section in order to form a 120-meters long mast 1. The position of the opening of the internal flange 32 can be different, such as the form of this opening. In some cases, the opening is not mandatory.

According to one embodiment of the invention, the side wall(s) can comprise several superimposed corrugated metal sheets placed between the external and the internal metal panels. The method to manufacture these side walls can be similar than the two embodiments described above except that several corrugated metal sheets are joined together, by gluing or welding, and between the external and internal metal panels. Preferably, the amplitude and/or period and/or thickness of the corrugations are different from one corrugated metal sheet to another, and a flat metal sheet is preferably arranged between two consecutive corrugated metal sheets. This configuration can result in a reduction in the intensity of the 3P frequency, thus reducing induced fatigue and extending the service life of the mast. When there are several corrugated metal sheets, it is preferable that the corrugated metal sheets have neither the same thickness nor the same period, to improve the mast's vibratory properties. The use of several corrugated metal sheets also allows to reduce the thickness of the different parts forming the side wall.

As explained above, the space formed between the external panel and the internal panel can sealed. In such a configuration, it is possible that at least one side wall of the mast comprises comprising at least one pressurizing of the space formed between the external metal panel and the internal metal panel. Pressurization of this internal volume, when combined with pressure-measuring equipment, ensures that there are no leaks due to welding defects or corrosion or service cracking. It also limits the mechanical effects of mast oscillations caused by wind variations on the turbine and blades. The use of a mast with a "sandwich panel" wall makes it possible, for the same thickness as a solid steel wall, to increase the rigidity of the mast while reducing the quantity of steel used for construction without compromising structural performance. This is particularly interesting when the mast is installed on a float, in order to reduce its weight and/or increase its stiffness. The pressurization can be performed just once in order to check the mast sealing, or can be maintained to obtain all the effects listed above. In such a case, at least one side wall of the mast comprises a tapping equipped with a valve and a pressure gauge in order to pressurized the internal volume of the mast, which can be pressurized with air, preferably dry air, at a pressure adapted to the conditions of use, typically between 0.1 and 2 bar, relative to atmospheric pressure.

### List of numerical references

1: mast
2, 2': section
4, 14, 24, 34 : side wall
6, 16, 26, 36 : external metal panel
8, 18, 28, 38 : internal metal panel
10, 20, 30, 40 : corrugated metal sheet
12: end of the internal metal panel
22: end of the external metal panel
32: internal flanges

## Claims

1. Offshore wind turbine mast (1) comprising a main body formed by at least one section (2, 2'), the section comprising at least one side wall comprising:
- an external metal panel (6, 16, 26, 36),
- an internal metal panel (8, 18, 28, 38) parallel to the external metal panel,
- at least one corrugated metal sheet (10, 20, 30, 40) extending within a space formed between the external metal panel and the internal metal panel, wherein the corrugated metal sheet is attached to both the internal metal panel and the external metal panel.

2. Offshore wind turbine mast (1) according to claim 1, wherein the section (2) is formed by only one tubular side wall.

3. Offshore wind turbine mast (1) according to claim 1, wherein the section (2') is formed by multiple flat side walls (14, 24, 34) attached to each other.

4. Offshore wind turbine mast (1) according to claim 3, wherein at least one flat side wall (14, 24, 34) forms an airtight volume relative to the other flat side walls (14, 24).

5. Offshore wind turbine mast (1) according to any of claims 3 or 4, wherein at least one flat side wall (14, 24, 34) comprises at least one connecting end to a second flat side wall (14, 24, 34) formed solely by the external metal panel and/or by the internal metal panel and including a fold.

6. Offshore wind turbine mast (1) according to any preceding claim, wherein the side wall comprises several superimposed corrugated metal sheets.

7. Offshore wind turbine mast (1) according to the preceding claim, wherein the amplitude. and/or period and/or thickness of the corrugations are different from one corrugated metal sheet to another, and a flat metal sheet is preferably arranged between two consecutive corrugated metal sheets.

8. Offshore wind turbine mast (1) according to any preceding claim, wherein the space formed between the external metal panel (6, 16, 26) and the internal metal panel (8, 18, 28) is sealed, at least one side wall of the mast comprising at least one pressurizing device of the space formed between the external metal panel and the internal metal panel.

9. Offshore wind turbine mast (1) according to the preceding claim, wherein the pressurizing device is configured to maintain a constant overpressure in the space formed between the external metal panel (6, 16, 26) and the internal metal panel (8, 18, 28).

10. Panel intended to form at least one part of an offshore wind turbine mast (1), the panel comprising:
- an external metal panel (6, 16, 26),
- an internal metal panel (8, 18, 28) parallel to the external metal panel,
- at least one corrugated metal sheet (10, 20, 30) extending within a space formed between the external metal panel and the internal metal panel, wherein the corrugated metal sheet is attached to both the internal metal panel and the external metal panel, the panel forming a sealed internal volume.
